(19) Europäisches Patentamt / European Patent Office / Office européen des brevets

(11) **EP 2 246 819 A1**

(12) **EUROPEAN PATENT APPLICATION**

(43) Date of publication:
**03.11.2010 Bulletin 2010/44**

(51) Int Cl.:
***G06T 5/00*** *(2006.01)*

(21) Application number: **10161532.6**

(22) Date of filing: **29.04.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(30) Priority: **01.05.2009 GB 0907543**

(71) Applicant: **STMicroelectronics (Research & Development) Limited Marlow, Buckinghamshire SL7 1YL (GB)**

(72) Inventors:
• **The inventors have agreed to waive their entitlement to designation.**

(74) Representative: **Hayden, Nicholas Mark Murgitroyd & Company Scotland House 165-169 Scotland Street Glasgow G5 8PL (GB)**

(54) **Artefact removal from phase encoded images**

(57)     PSF coding has become well known in recent years. Although it enables significant increases in the depth of field, defocus introduces artefacts in images that are a major detraction from the final image quality. A method is described that enables the deduction or defocus and consequently the removal of these artefacts. The principle of the techniques involves iteratively adjusting the restoration algorithm according to a chosen artefact metric and choosing the defocus parameter that yields the image the lowest level of artefact.

Fig. 7

**EP 2 246 819 A1**

**Description**

The present invention relates to the removal of image artefacts, in particular to the removal of artefacts from phase encoded images.

It has been known in many different fields to phase-encode image data. One such field is the recently developed wavefront coding (WFC) technique, developed to increase the depth of field of incoherent optical systems and described in E. Dowski and T. W. Cathey, "Extended depth of field through wavefront coding,"Appl. Opt. 34, 1859-1866 (1995).

In this approach, pupil-plane masks are designed to alter, that is to code, the transmitted incoherent wavefront so that the point-spread function (PSF) is almost constant near the focal plane and is highly extended in comparison with the conventional Airy pattern. As a consequence the wavefront coded image is distorted and can be accurately restored with digital processing for a wide range of defocus values. By jointly optimising the optical coding and digital decoding, it is possible to achieve tolerance to defocus which could not be attained by traditional imaging systems whilst maintaining their diffraction-limited resolution.

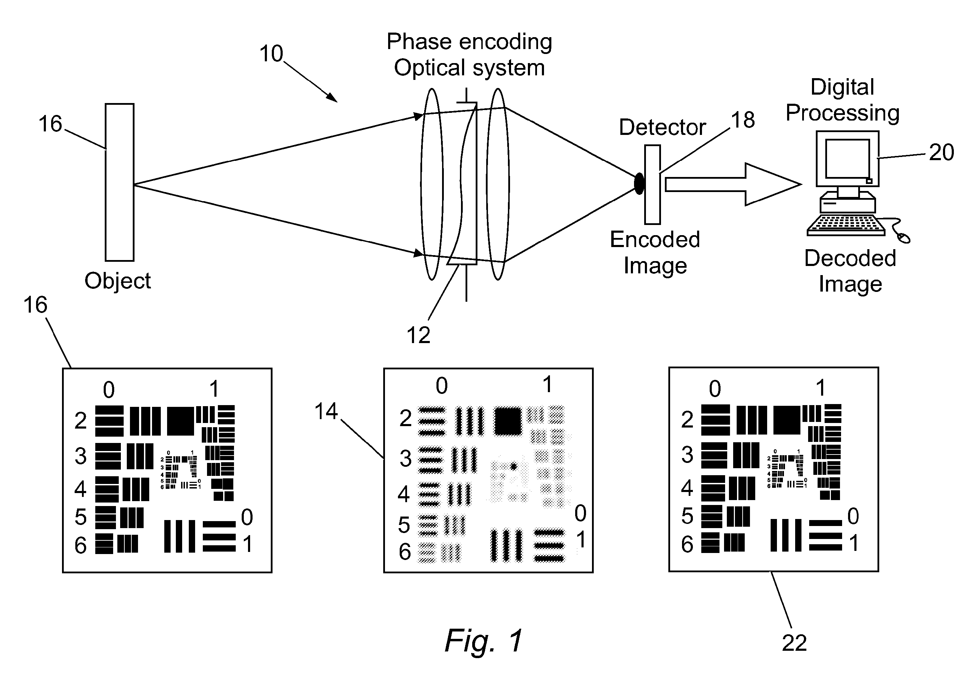

The phase encoding principle is illustrated in Figure 1. An optical system 10 comprises lenses and/or other optical elements and a phase encoding means 12 which is near to or in the pupil plane that changes the phase of the radiation that is incident upon it. The phase encoding means 12 can take the form of a phase mask. Due to the phase mask, the optical system 10 produces a phase encoded image 14 of an object 16, which is detected by image sensing means 18. The phase encoded image 14 appears blurred when viewed. Processing means 20 then applies a reconstruction algorithm to remove the phase encoding to produce a restored image 22, which appears in focus, that is, sharp, when viewed. Because the variation in the point spread function is predetermined by the choice of mask, the reconstruction algorithm can be written to reverse the blurring effects of the phase encoding means 12.

Various methods have been used for the design of phase mask, for both square and circular apertures. Early design of phase masks was carried out in the frequency domain by the use of the ambiguity function (AF). The AF combined with the stationary phase approximation indicates that the ideal phase mask for extending the depth of field must be anti-symmetric and have a linear separable cubic form:

$$f\left(x,y\right)=\alpha\left(x^3+y^3\right)$$

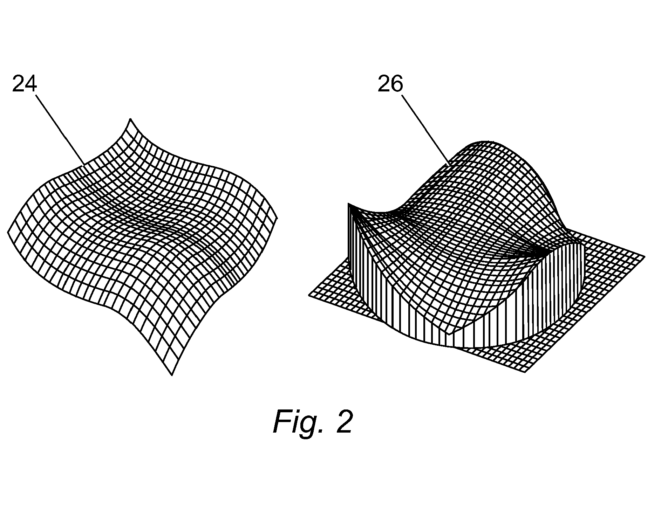

A cubic phase mask 24 of this type is illustrated in Fig. 2. The strength of the phase mask, $\alpha$, sets the maximum wavefront deviation and yields the amount of defocus invariance in the decoded image.

In the last five years, pupil plane encoding has been extended to include more general phase functions; phase masks have been successfully designed in the spatial domain in which the point spread function (PSF), Strehl ratio and Fisher information metrics are solved to be invariant to defocus. A technique called Pupil Plane Engineering has been developed by Prasad et al, and is described in S. Prasad, T. Torgersen, V. P. Pauca, R. Plemmons, J. van der Gracht, "Engineering the Pupil Phase to Improve Image Quality," in Proceedings of the SPIE, Vol. 5108 Visual Information Processing XII, edited by Z. Rahman, R. Schowengrdt, and S. Reichenbach (SPIE, Wellingham, WA, 2003), pp. 1-12. This approach generalises the shape of the mask to include higher polynomial orders and is optimised by means of Fisher information metrics. The derived PPE mask 26, see Fig. 2, has an anti-symmetric phase shape (like a petal) and is given by:

$$\theta(x,y)=\beta(x^3+y^3)+\gamma(x^2y+xy^2)$$

where |x|<1, |y|<1 are normalised co-ordinates and $\beta$ and $\gamma$ are real variables that control the optical path difference (OPD) or amount of coding introduced in the transmitted wavefront of the optical system. We will denote by $\alpha$ the OPD introduced by a phase mask. For the 2D cubic phase mask, the maximum the peak-to-valley OPD is given by $4\alpha$.

In addition, radially symmetric quartic and logarithmic phase masks, which can be manufactured using traditional techniques, also enable aberration mitigation. The performance attained by these kinds of phase mask cannot equal that of anti-symmetric masks, but are suitable under modest amounts of aberrations and can be used without digital signal processing.

Phase coding and other phase perturbation techniques can greatly increase the depth of field which is useful for a wide range of applications and environments. However, this advantage is achieved at the expense of noise amplification during the decoding process. This effect increases with the strength of phase mask that is applied. Since the restored image suffers from a reduced signal-to-noise ratio, a trade-off between the signal-to-noise ratio of the restored image and its depth of field is required. Therefore, there is a noise cost that is inherent to the wavefront coding itself.

Furthermore, the PSF of such optical systems is usually considered to be shape invariant with defocus near the focal plane, so that the restoration of objects that belong to a specific range of defocus can be performed with a single kernel. However, there are in fact significant phase variations and amplitude variations of the Optical Transfer Function with defocus which cannot be compensated for by restoration using a single kernel. These variations in the OTF result in artefacts being embedded in the restored images which degrade the quality of the restored image.

These defects are generally poorly described in the literature, as they are not important in lower quality image systems. However, it is known how to remove these artefacts with specialised nonlinear filters. If the phase encoding means is rectangularly separable, the operation of the filters is also rectangularly separable so that computational speed can be increased through parallel processing.

Also, an approximate expression of the OTF of an optical system including a cubic phase mask is given in G. Muyo and A. Harvey, "Decomposition of the optical transfer function: wavefront coding imaging systems,"Opt. Letters, 2005, 2715-2717. This paper shows how the decomposition of the optical transfer function (OTF) of a wavefront coding system can be described as a generalised Cornu spiral (GCS), the geometry of which can be used to estimate an approximation of the value for the phase and magnitude of the optical transfer function (OTF), the maximum value of a defocus coefficient for which the OTF can be considered to be approximately constant, the magnitude of the amplitude modulation of the MTF within the region of invariance, and the magnitude of phase modulation introduced. These features present in the OTFs of wavefront coded systems are explained analytically and so the possibility of simple calibration was introduced, that is, estimating the discrepancy between the coding and decoding kernels.

In EP1926047 the present applicant disclosed a method for removal of artefacts from a restored phase encoded image. It included an automated step of comparing a number of images, wherein an image metric, usually contrast, was used in the comparison in order to choose the best image, that is the resultant image with the least artefacts. However, this method can be shown to fail in certain situations. Consequently an improved method is desired.

According to a first aspect of the present invention there is provided a method of imaging an object, comprising the steps of:

    a. introducing a phase perturbation to get a phase encoded image;
    b. recording the encoded image data;
    c. estimating a degree of defocus in the phase encoded image;
    d. performing a reconstruction algorithm on the phase encoded image to obtain a restored image in which the effects of the phase perturbation are removed;
    e. repeating steps c and d for different estimates of degrees of defocus so as to obtain a number of images each corresponding to a different degree of defocus;
    f. applying an artefact metric to each of the obtained restored images; and
    g. using the artefact metric to estimate the degree of defocus for the reconstruction algorithm.

The step of using the artefact metric to estimate the degree of defocus for the reconstruction algorithm may comprise
performing an iterative analysis of each of the obtained restored images, and
choosing the defocus parameter that minimises the artefact metric.

The artefact metric may be based upon the measurement of high frequency variations in the image. The defocus parameter chosen may be the one that minimises said high frequency variations. The artefact metric may be the weighted sum of the Median Absolute Deviation (MAD) of high pass bands. Said high pass bands may be obtained using a Discrete Wavelet Transformation (DWT). In one embodiment four of said high pass bands are used.

Each high pass band may be obtained with a Haar filter.

Each high pass band of level L may be weighted with exp[L-1].

Preferably, after the step of recording the phase encoded image data and prior to the subsequent proceeding steps, an image segmentation step is performed and the restored image for each segmented image feature is obtained, each of which are then combined to form the composite restored image.

Preferably, the step of introducing a phase perturbation is performed with a phase mask that yields a focus invariant point-spread function.

Preferably, the phase mask is a cubic or petal phase mask.

It is to be understood that the phase mask can be an infinite number of different shapes. When considering the special cases of cubic or petal phase masks as mentioned here and elsewhere in the description it is to be understood that the terms are intended to encompass deviations from the usual shapes as illustrated in the figures, so long as an overall characteristic cubic or petal form is retained in a general sense. That is, changes can be made to the usual cubic and petal shapes that act only to fine tune the effects of the masks rather than to substantially alter their characteristics, and changes of this type are intended to be included in the terms "cubic" and "petal" phase masks in the context of the present description at all points.

Preferably, the step of introducing a phase perturbation comprises a wavefront coding step.

Preferably, the step of recording the phase encoded image data comprises detecting the image with a digital image sensor.

According to a second aspect of the present invention there is provided a method of removing artefacts from a reconstructed phase encoded image, comprising the steps of:

> a. estimating a degree of defocus in the reconstructed phase encoded image;
> b. performing a reconstruction algorithm on the phase encoded image to obtain a restored image in which the effects of the phase perturbation are removed;
> c. repeating steps a and b for different estimates of degrees of defocus so as to obtain a number of images each corresponding to a different degree of defocus;
> d. applying an artefact metric to each of the obtained restored images;
> e. Using the artefact metric to estimate the degree of defocus for the reconstruction algorithm.

The step of using the artefact metric to estimate the degree of defocus for the reconstruction algorithm may comprise:

> performing an iterative analysis of each of the obtained restored images, and
> choosing the defocus parameter that minimises the artefact metric.

The artefact metric may be based upon the measurement of high frequency variations in the image. The defocus parameter chosen may be the one that minimises said high frequency variations. The artefact metric may be the weighted sum of the Median Absolute Deviation (MAD) of high pass bands. Said high pass bands may be obtained using a Discrete Wavelet Transformation (DWT). In one embodiment four of said high pass bands are used.

Each high pass band may be obtained with a Haar filter

Each high pass band of level L may be weighted with exp[L-1].

According to a third aspect of the present invention there is provided signal processing means for the performance of an image reconstruction algorithm comprising,
image restoration means operable to estimate a degree of defocus in the reconstructed phase encoded image and to perform a reconstruction algorithm on the phase encoded image so as to obtain a restored image in which the effects of the phase perturbation are removed; said image restoration means being further operable to obtain a number of restored images for different estimates of degrees of defocus;
means operable to apply an artefact metric to each of the obtained restored images;
means operable to estimate the degree of defocus for the reconstruction algorithm, using the artefact metric.

Said means operable to estimate the degree of defocus for the reconstruction algorithm, using the artefact metric, may comprise:

> means operable to perform an iterative analysis of each of the obtained restored images, and
> means operable to choose the defocus parameter that minimises the artefact metric.

Said means operable to choose the defocus parameter, may choose the defocus parameter that minimises said high frequency variations.

Said artefact metric may be the weighted sum of the Median Absolute Deviation (MAD) of high pass bands. Said high pass bands may be obtained using a Discrete Wavelet Transformation (DWT). Four of said high pass bands may be used. high pass band may be obtained with a Haar filter. Each high pass band of level L may be weighted with exp[L-1].

According to a fourth aspect of the present invention there is provided an imaging system comprising:

> an optical system with phase encoding means;
> an image sensing means arranged to record the phase encoded image data; and
> signal processing means according to the third aspect for performing an image reconstruction algorithm to obtain an image in which the effects of the phase perturbation are removed.

Preferably, said phase encoding means comprises a phase mask that yields a focus invariant point-spread function.

Preferably, the phase mask is a cubic or petal phase mask. The scope of these terms is discussed above.

Preferably, the phase encoding means comprises wavefront coding means.

Preferably, the image sensing means comprises a digital image sensor.

Preferably, the imaging system comprises memory means for storing the estimated degree of defocus.

Preferably, the memory means comprises a non-volatile memory portion formed on a coprocessor or on an image sensing integrated circuit.

According to a fifth aspect of the present invention there is provided a mobile device comprising an imaging system according to the fourth aspect.

The mobile device is preferably one of a mobile telephone, laptop computer, webcam, digital still camera, camcorder, optical mouse or barcode reader.

The present invention will now be described, by way of example only, with reference to the accompanying drawings, in which:

Figure 1 shows a known phase encoding imaging system;

Figure 2 shows cubic and petal phase masks for use with imaging system of Figure 1;

Figure 3 shows the variation with defocus of the point spread function of the imaging system of Figure 1 used with the cubic phase mask of Figure 2, that is subsequent to deconvolution using the in-focus PSF;

Figure 4 shows a line-transfer function of a conventional optical system as a function of a defocus parameter $W_{20}$;

Figure 5 shows a line-transfer function as a function of a defocus $W_{20}$ for the imaging system of Figure 1;

Figure 6 shows restoration artefacts after deconvolution of a high contrast circular target with cubic and petal phase masks;

Figure 7 illustrates an image restoration process according to a first embodiment;

Figure 8 illustrates the iterative restoration step of Figure 7;

Figures 9a and 9b shows the variance of the restored image of the second reference image as a function of the defocus parameter used in the deconvolution kernels in examples were the metric based on variance fails;

Figures 10a and 10b show respectively image artefacts obtained using an analytical expression, and image artefacts obtained using a simulation;

Figure 11a shows the normalized artefact metric of 5 images of "Lena", having a SNR of infinity, as a function of the kernel restoring the image;

Figures 11b-11e shows one image which is defocused by 2.76 waves and restored with kernels corresponding to a defocus of 2.66, 3, 0 and 5 waves;

Figure 12a shows the normalized artefact metric of 5 images of "Lena", having a SNR of 40.256 dB, as a function of the kernel restoring the image;

Figures 12b-12e shows one image which is defocused by 2.76 waves and restored with kernels corresponding to a defocus of 2.66, 3, 0 and 5 waves;

Figure 13a shows the normalized artefact metric of 5 images of "Lena", having a SNR of infinity, as a function of the kernel restoring the image;

Figures 13b-13e shows one image which is defocused by 2.76 waves and restored with kernels corresponding to a defocus of 2.66, 3, 0 and 5 waves;

Figure 14a shows the normalized artefact metric of 5 images of a boat, having a SNR of infinity, as a function of the kernel restoring the image;

Figures 14b-14e shows one image which is defocused by 2.76 waves and restored with kernels corresponding to a defocus of 2.66, 3, 0 and 5 waves;

Figure 15a shows the normalized artefact metric of 5 images of a bridge, having a SNR of infinity, as a function of the kernel restoring the image;

Figures 15b-15e shows one image which is defocused by 2.76 waves and restored with kernels corresponding to a defocus of 2.66, 3, 0 and 5 waves;

Figure 16a shows the normalized artefact metric of 5 images of a man, having a SNR of infinity, as a function of the kernel restoring the image;

Figures 16b-16e shows one image which is defocused by 2.76 waves and restored with kernels corresponding to a defocus of 2.66, 3, 0 and 5 waves;

Figure 17a shows the normalized artefact metric of 5 images of a mandrill, having a SNR of infinity, as a function of the kernel restoring the image;

Figures 17b-17e shows one image which is defocused by 2.76 waves and restored with kernels corresponding to a defocus of 2.66, 3, 0 and 5 waves;

Figure 18a shows the normalized artefact metric of 5 images of plastic bubbles (magnified in microscope), having a SNR of infinity, as a function of the kernel restoring the image;

Figures 18b-18e shows one image which is defocused by 2.76 waves and restored with kernels corresponding to a defocus of 2.66, 3, 0 and 5 waves;

Figure 19a shows the normalized artefact metric of 5 images of a spoke target, having a SNR of infinity, as a function of the kernel restoring the image; and

Figures 19b-19e shows one image which is defocused by 2.76 waves and restored with kernels corresponding to a defocus of 2.66, 3, 0 and 5 waves.

Fig. 2 shows that both the cubic and PPE phase masks are anti-symmetric. The OTF of such optical systems is complex and varies significantly with the defocus parameter $W_{20}$. The defocus aberration coefficient $W_{20}$ is well known and takes the form:

$$W_{20} = \frac{\delta z}{8 \cdot \left( f/\# \right)^2} \ ,$$

where dz is the shift in the lens to image distance from nominal and f/# is the f-number of the lens. In the case of rotationally symmetric phase masks the OTF are always real. The inventors have realised that the main cause of the image artefacts in a reconstructed phase encoded image is the discrepancy between the phase of the coding OTF and the phase of the decoding filter.

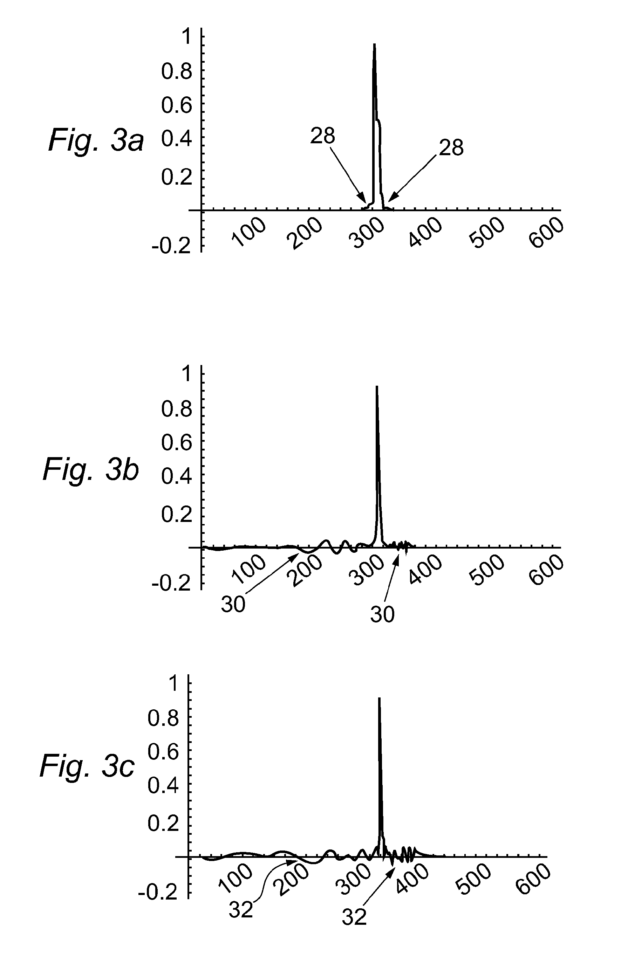

Fig. 3 shows the PSF after restoration (with a signal magnitude in arbitrary units plotted on the y-axis versus spatial position on the x-axis) of a hybrid optical/digital system including a cubic phase mask for various values of defocus, assuming a phase mask strength of $5\lambda$. Fig. 3a shows the PSF for zero defocus ($W_{20}=0\lambda$), in which it can be seen that the point remains well defined, having the characteristics $Sinc^2$ form of a uniformly illuminated aperture. Fig. 3b shows the PSF for a mild defocus ($W_{20}=\lambda$), where the phase variation of the OTF has resulted in sidelobe levels of increased magnitude and extent and Fig. 3c shows the PSF for a severe defocus ($W_{20}=2\lambda$) with further increased sidelobe effects at low spatial frequencies 32.

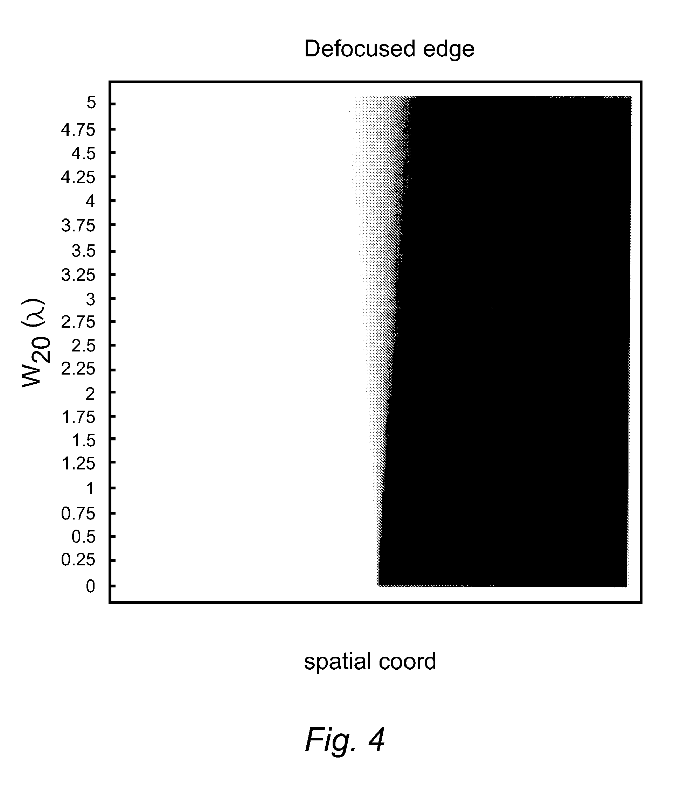

This variation of PSF with defocus is responsible for varying artefacts in the restored images depending on the defocus of the object. Fig. 4 shows how an edge is imaged with a conventional optical system for different values of defocus, plotted against the y-axis. It can be seen that the boundary between the light and dark regions is sharp at $W_{20}=0$, but that it gets progressively more blurred as $W_{20}$ increases.

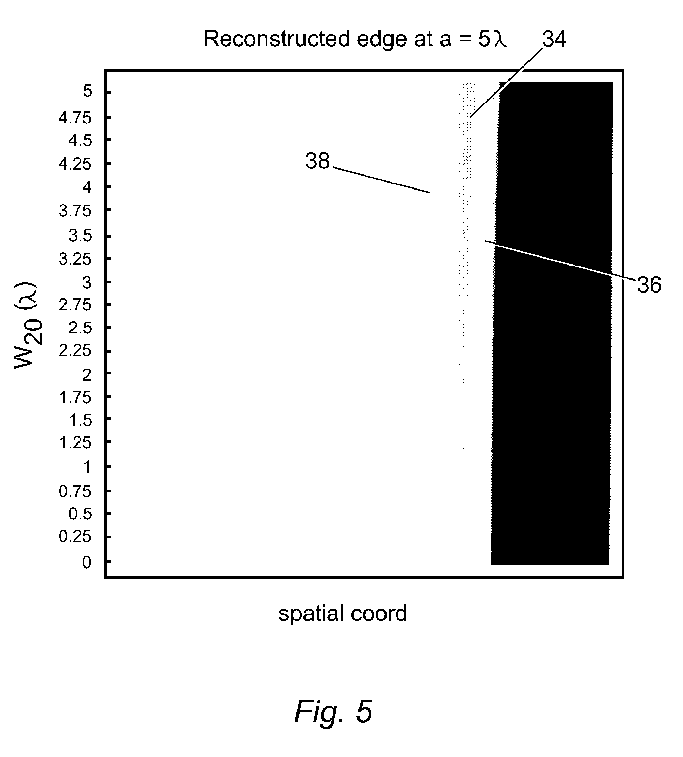

Fig. 5 illustrates how the same edge is imaged with a wavefront coded imaging system. It can be seen that the boundary between the light and dark regions is much sharper through the range of defocus values, as expected. However, Fig. 5 also shows that there are restoration artefacts, in the form of ripples 34, 36, 38, that vary with the defocus parameter $W_{20}$. Therefore, one can interpret the artefacts in the restored image as a defocus signature.

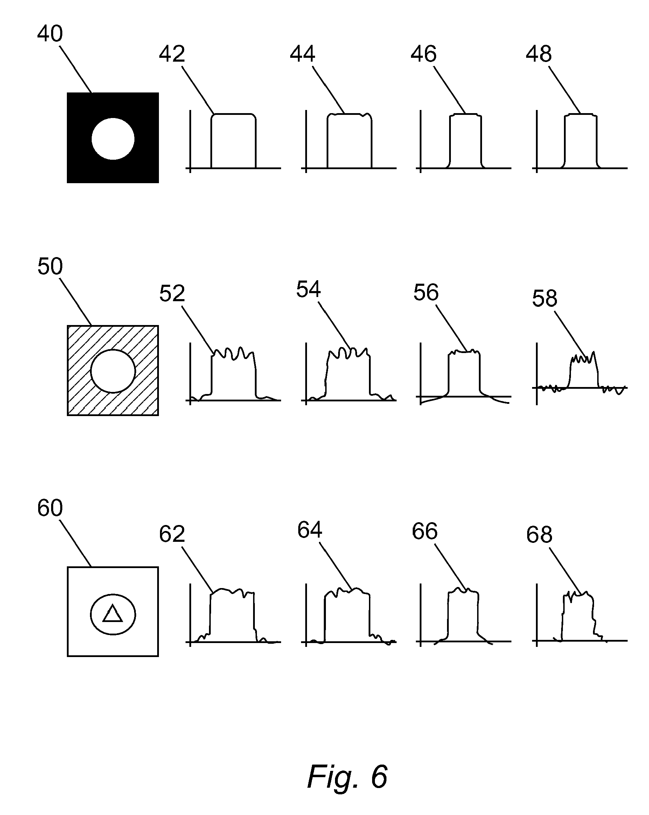

This is illustrated again in Fig. 6, in which the strength of the phase mask is again assumed to be $\alpha=5\lambda$. The top row shows a high contrast circular target 40, together with various sections through the target at zero misfocus, including a horizontal section 42 taken along a horizontal axis, a vertical section 44 taken along a vertical axis, a first diagonal section 46 taken along a diagonal running from the bottom left corner to the top right corner, and a second diagonal section 48 taken along a diagonal running from the top left corner to the bottom right corner, where each of the above axes and diagonals are the lines passing through the centre of the target 40 as illustrated. The middle row illustrates the blurred image 50 formed with a cubic phase mask, of the type illustrated in Fig. 2 that introduces a defocus of $4\lambda$, and the sections 52-58 of the reconstructed image, along the same respective axes or diagonals as the sections 42-48 illustrated directly above them. The bottom row illustrates the blurred image 60 formed with a petal phase mask with the same peak-to-valley OPD as the cubic phase mask, of the type illustrated in Fig. 2 that introduces a defocus of $4\lambda$, and the section 62-68 of the reconstructed image, along the same respective axes or diagonals as the section 42-48 as illustrated above them in the top row. The artefacts in the sections 52-58 and 62-68 can be seen as the variations from the ideal sections 42-48, and as discussed, these artefacts arise from the phase and amplitude disparities between the optical convolution and digital deconvolution kernels.

Such artefacts may be mitigated if the restoration algorithm kernel matched the PSF exactly. In essence the artefact is a manifestation of the phase mismatch between the actual PSF and that expected by the decoding kernel. The phase mismatch is a result of the defocus of the camera system, which may be dependent on the position of the object with respect to the focused distance of the camera in object space. The decoding kernel may be set for any defocus value if the PSF at that defocus is known. Thus if the phase mismatch is estimated from the artefact seen for a nominal defocus an alternative kernel can be employed that matched the defocus of the image and nullify the artefact.

One can then remove the artefacts present in the restored image of an object that originally has a defocus $W_{20}$, by deducing the optical convolution kernel and then decoding the detected image with the appropriate digital kernel. Thus, removing the artefacts becomes a matter of estimating the defocus present in the image. This estimation can be achieved with various restoration kernels, iteratively adjusting the restoration kernel according to an artefact metric and choosing the defocus parameter that yields the image the lowest level of artefact.

Image segmentation can also be used to deal with images that comprise several features (or objects) with different degrees of defocus. Image segmentation algorithms are well known *per se,* and so will not be described in detail herein. In the case of a segmented image, the iterative restoration is applied to each segmented feature or object separately.

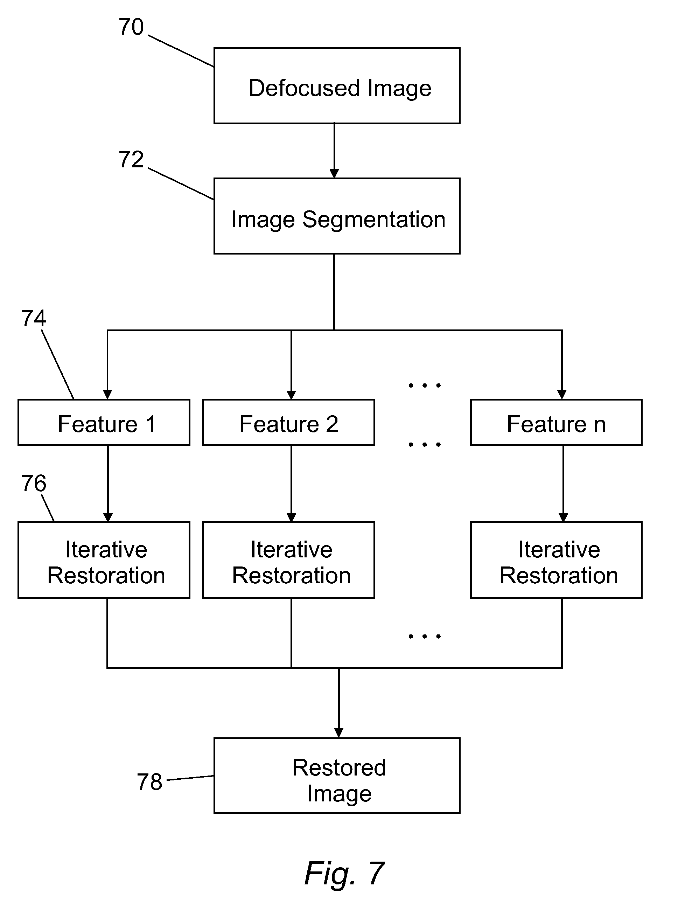

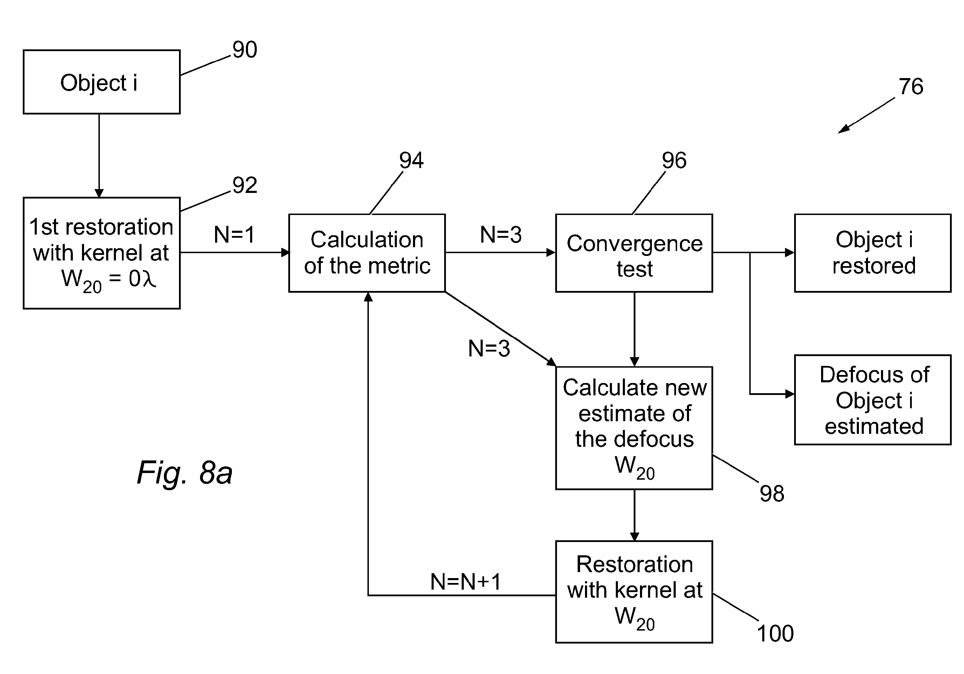

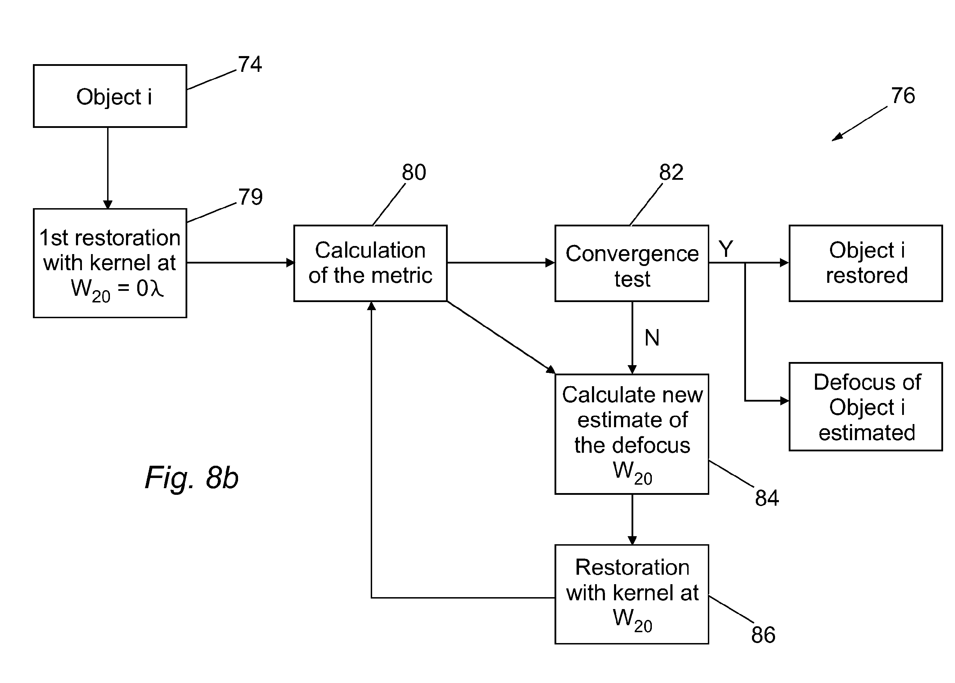

The restoration algorithm follows the process depicted in Figs. 7 and 8. A defocused image 70 corresponds to the phase encoded (blurred) image 14 of the standard set up illustrated in Fig. 1. The defocused image 70 is operated on by an image segmentation algorithm 72 which detects and defines a plurality of features 74 within the image. Each of the objects 74 is then operated on by an iterative restoration process 76 before being combined to form a new restored image 78. It will be appreciated that the image segmentation step 72 is optional, and in the event of its omission the defocused image 70 would be directly operated on by the iterative restoration process 74 to render the new restored image 78.

Examples of the operation of the iterative restoration process 76 are shown in Figs. 8a and 8b.

As shown in Fig. 8a, after object i 90 is obtained, a first restoration 92 is carried out with a kernel at $W_{20}=0$. The artefact metric is then calculated (94) a number of times before a convergence test is carried out (96) to determine for which value of $W_{20}$ the artefact metric is optimised. In the embodiment of Fig. 8a, convergence depends on the turning point in a plot of a graph of the metric against $W_{20}$, and so the metric must be measured for at least three values of $W_{20}$ before convergence can be assumed. Thus at the first calculation of the metric (94) a counter is set to zero, and a new estimate of the defocus parameter is calculated for the first given value of $W_{20}$. A restoration 100 is then carried out with the new kernel, and the counter is incremented so that the metric can be recalculated (94). This cycle repeats until the counter reaches a predetermined limit (which can in one example be three passes), and once the limit is reached a convergence test 96 is carried out which selects the appropriate deconvolution kernel and yields a restored object together with an estimated defocus.

A second alternative embodiment of the iterative restoration process 76 is shown in Fig. 8b. After object *i* 74 is obtained, a first restoration 79 is carried out with a kernel at $W_{20}=0$. The artefact metric is then calculated (80) and then a convergence test is carried out 82 to determine if the artefact metric is optimised, that is, whether the metric is within a predetermined level of a predetermined threshold. If the convergence test 82 yields a positive result (Y), the object i 74 is restored and an estimation of the defocus is achieved. If the convergence test 82 yields a negative result (N), a new estimate of the defocus parameter $W_{20}$ is calculated, 84, which is then used to modify the kernel of the restoration algorithm, 86. This loop is repeated until the convergence test 82 yields a positive result.

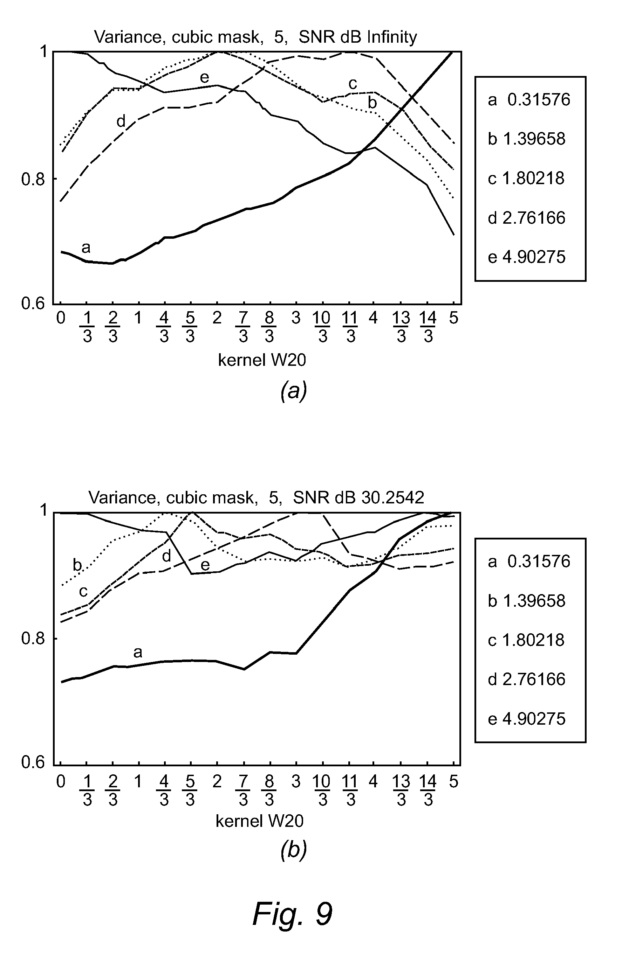

EP1926047 disclosed using an image metric, and in particular the image contrast as one possible metric, based on a calculation of the image's variance after rescaling. However, this is not always successful. Figure 9a shows the performance of the variance based metric, after image normalization to a range from 0-1, with an image of a man. This is one example of an image without noise where use of the variance metric fails. Similarly, figure 9b shows the performance of the variance metric, after image normalization to a range from 0-1, with the image of Lena with noise of 30.2542 dB before restoration. This is an example of an image with noise where use of the variance metric fails.

The artefact metric is the weighted sum of the Median Absolute Deviation (MAD) of high pass bands obtained with a Discrete Wavelet Transformation (DWT). This metric is based on the following theory.

From G. Muyo and A. Harvey, "Decomposition of the optical transfer function: wavefront coding imaging systems, " Opt. Letters, 2005, 2715-2717, one can find the optical transfer function (OTF) phase modulation with a cubic phase mask in a rectangular aperture

$$\theta(W_{20}) \approx -4\pi v(-\alpha v^2 + \frac{W_{20}^2}{3\alpha}) + \frac{\sqrt{3\alpha v}}{2\pi v[W_{20} - |W_{20}|_{max}]}\sin\left[\frac{4\pi v}{3\alpha}[W_{20} - |W_{20}|_{max}]^2 + \frac{\pi}{4}\right] \qquad (1)$$

where $\alpha$ and $W_{20}$ are normalized with respect to $\lambda$, $v$ is the normalized spatial frequency with respect to the cut-off frequency, and the maximum defocus for an invariant modular transfer function (MTF) is $|W_{20}|_{max}=3\alpha(1-v)$. Using inverse filtering with two different phase modulations, $\theta(W_{20})$ and $\theta(W_{20,0})$, respectively the defocus for convolution and de-convolution in the OTF, the wavefront coded image in the Fourier domain can, in absence of noise, be written as

$$O'(v) = \exp[i\Delta\theta] \times O(v) \times H_{diff}(v) \qquad (2)$$

where $H_{diff}(v)$ is the diffraction-limited OTF and the total phase modulation with WFC is $\Delta\theta = \theta(W_{20}) - \theta(W_{20,0})$ which with simple algebra and by ignoring the constant term $\Pi/4$ in (1) is found to be

$$\Delta\theta = \frac{4\pi v(W_{20,0}^2 - W_{20}^2)}{3\alpha} + \frac{\sqrt{3\alpha v}}{2\pi v}\left(\frac{\sin[4\pi v(\Delta W_{20})^2/3\alpha]}{\Delta W_{20}} - \frac{\sin[4\pi v(\Delta W_{20,0})^2/3\alpha]}{\Delta W_{20,0}}\right) \qquad (3)$$

where $\Delta W_{20}=W_{20}-|W_{20}|_{max}$ and $\Delta W_{20,0}=W_{20,0}-|W_{20}|_{max}$. The first term in (3) is a linear phase shift and responsible for objects being linearly translated in the wavefront coded image in the spatial domain. The second term is a nonlinear phase shift and is responsible for objects having image artefacts in the wavefront coded image in the spatial domain. Both the linear and non-linear phase shift can be reduced by increasing $\alpha$. However, both phase shifts also increase with defocus. It is undesirable to increase $\alpha$ because this simply increases the noise amplification. It is desirable therefore to remove image artefacts without increasing noise amplification, that is to completely remove the total phase modulation and hence to find a solution for $\Delta\theta=0$. This is possible if and only if $W_{20}=W_{20,0}$, i.e. when the convolution OTF matches the de-convolution OTF.

Hence, in order to remove both image artefacts and image translation from a defocused object in a wavefront coded image, a defocused image can be restored with several defocused OTFs, thereby obtaining several restored images, from which it can be determined which one image is without image artefacts. Therefore it is required to obtain and store the defocused OTFs, and then to find an automatic determination of the image without image artefacts. For the latter requirement it would be desirable to define a simple and robust metric for image artefacts in WFC systems.

To demonstrate and confirm that (3) really is the reason for image artefacts, one can simply use equation (2) with (3) on an image of "Lena".

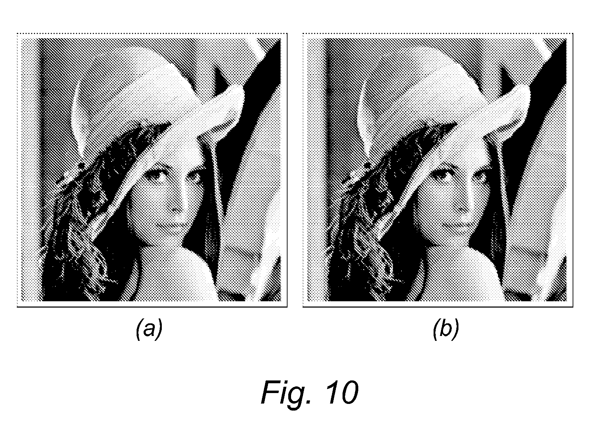

Figure 10a shows image artefacts obtained using a 2D version (without the linear phase term) of equation (3), with $\alpha=5$ and $W_{20}=5$, so as to obtain a wavefront coded image. Figure 10b shows image artefacts obtained using a simulation, again with with $\alpha=5$ and $W_{20}=5$. The two systems are different in that Figure 9a is produced by a quadratic aperture and Figure 9b is produced by a circular aperture and the analytical expression is an approximation to the actual function, as used in the simulation. The artefacts are however similar, which therefore confirms the validity of equations (1)-(3).

Since it is desired to define a metric for image artefacts and it is known that these can be explained with equations (2)-(3), these are analysed further. By using the Bessel function identity,

$$exp[iA\sin(Bv)] = \sum_{n=-\infty}^{\infty} J_n(A)exp[inBv]$$ (4)

equation (2) can be rewritten without the linear term in $\Delta\theta$ (3) as:

$$O'(v) = \sum_{n=-\infty}^{\infty} J_n(\frac{\sqrt{3}\alpha v}{2n\Delta W_{20}}) \sum_{n=-\infty}^{\infty} J_n(\frac{\sqrt{3}\alpha v}{2n\Delta W_{20,0}})exp\left[\frac{in4\pi(\Delta W_{20}^2 - \Delta W_{20,0}^2)v}{3\alpha}\right] \times O(v) \times H_{diff}(v)$$ (5)

From the above equation it is clear that the wavefront coded image is the original image with several linearly translated replicas of certain frequencies (especially the high frequencies) on top of itself. This is exactly what was observed in figure 9. As a result, the wavefront coded image (when the de-convolution OTF is different from the restoration OTF) will have a large variation of high frequencies. As a simple measure for image artefacts, one can therefore measure the variation of high frequencies.

There are several methods to detect high frequencies in images, for example by different types of high pass filters. Recently, Discrete Wavelet Transformations (DWTs) have been used for general analysis of images. DWTs offer great flexibility in terms of composition levels, wavelet types and computation time and this flexibility makes them desirable as a set of metrics for this analysis.

A DWT decomposes an image i of size $N_x, N_y$ pixels into depth d with a given wavelet filter w with multiplicity m into a single low pass-band l(i) of size $N_x/dm$, $N_y/dm$ and several high-pass bands $h_{L,direction}(i)$ filtered in 3 directions (vertical, diagonal and horizontal) for each high-pass band level L, organized in a list denoted by h(i).

Oscillations or variability can statistically be measured with robust estimators such as, for example, the median absolute deviation (MAD). Based on the analysis and observation and on the desire to make a simple and robust metric for image artefacts in WFC systems, the artefact metric may be defined as the sum of the Median Absolute Deviation (MAD) of the discrete wavelet transformed high-pass bands:

$$Artefact \equiv \sum MAD(h(i)) = \sum_L \sum_{direction} median_x \left(\left|h_{L,direction,x}(i) - median_y(h_{L,direction,y}(i))\right|\right)$$ (6)

The median absolute deviation from zero of a single high-pass band has previously been reported as a robust estimator for noise in the wavelet domain.

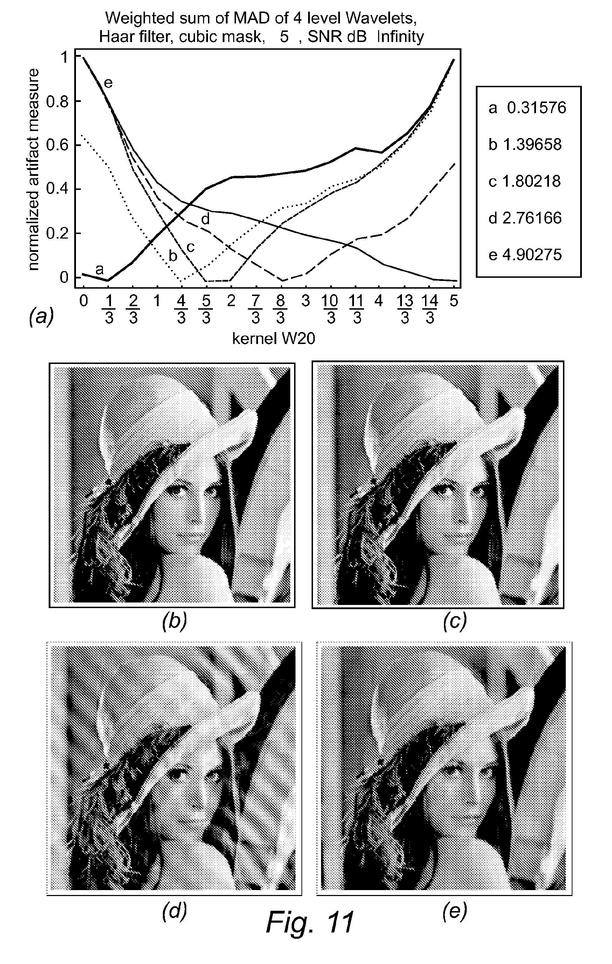

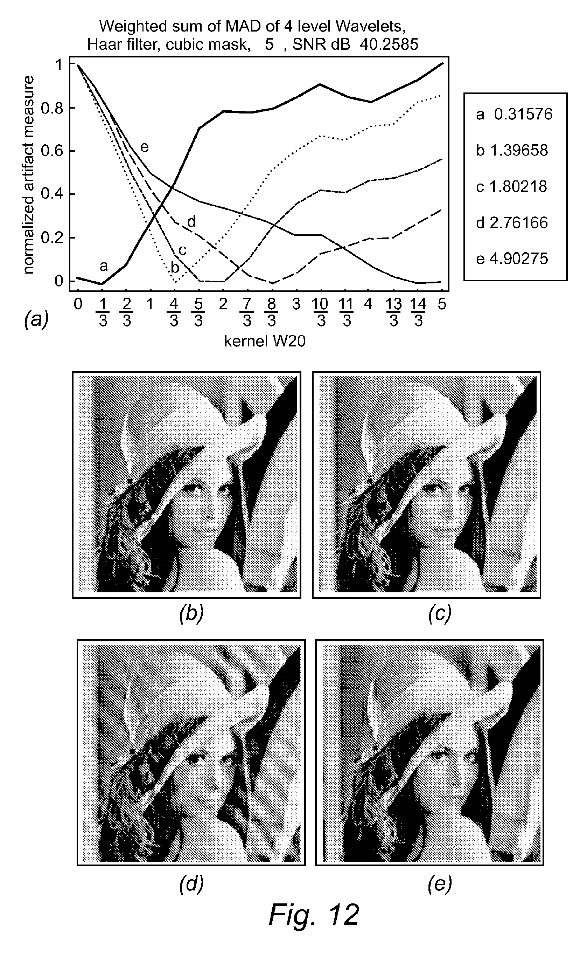

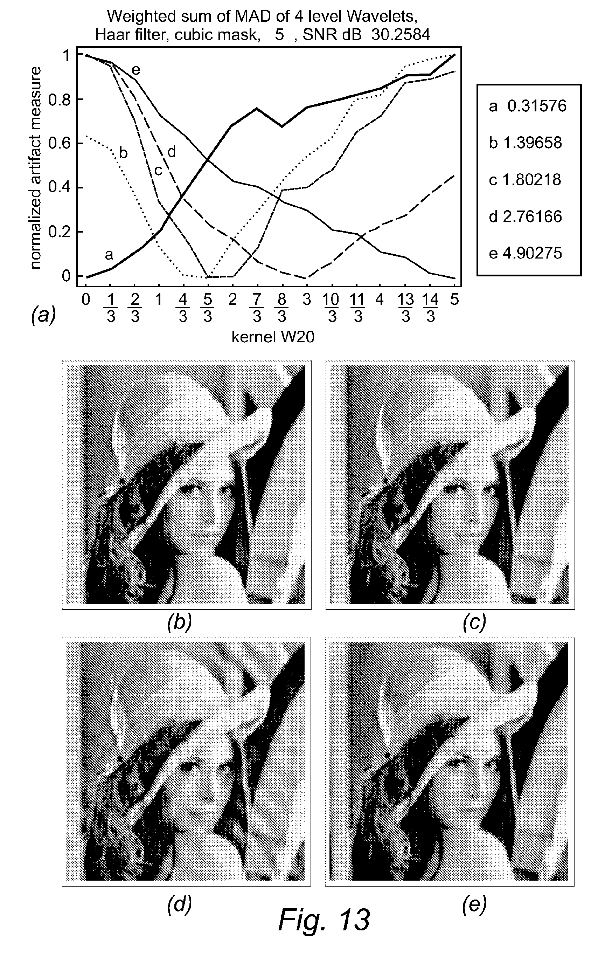

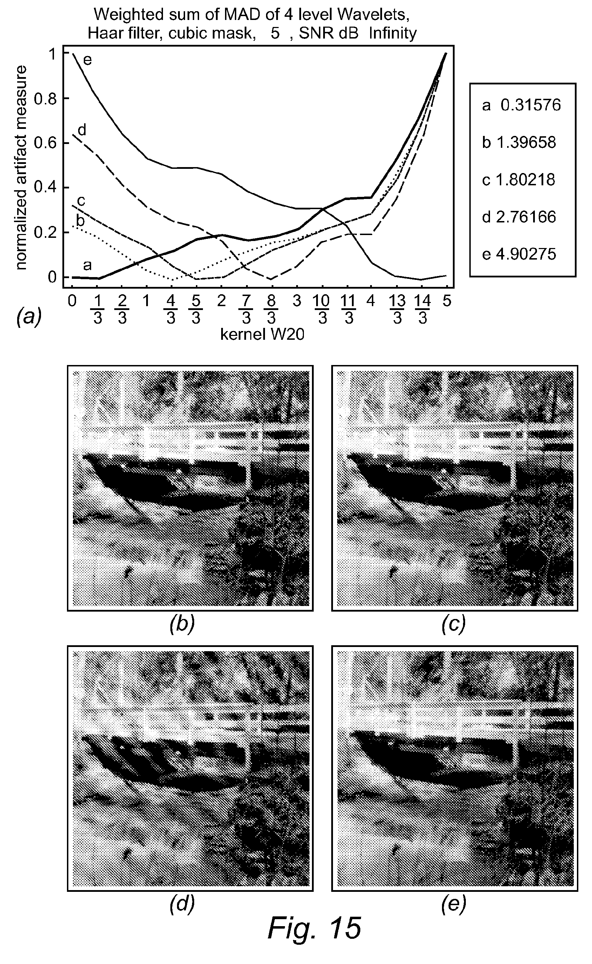

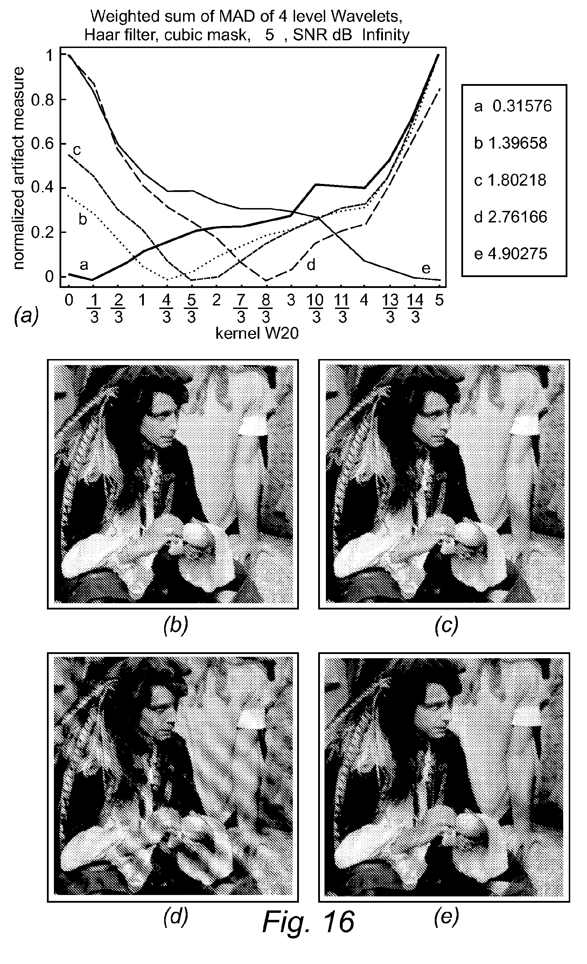

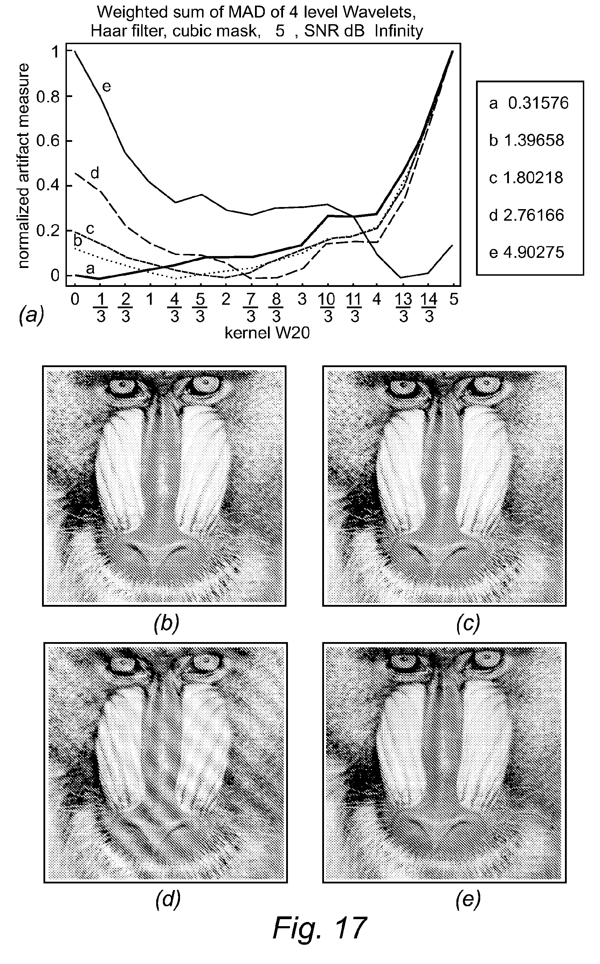

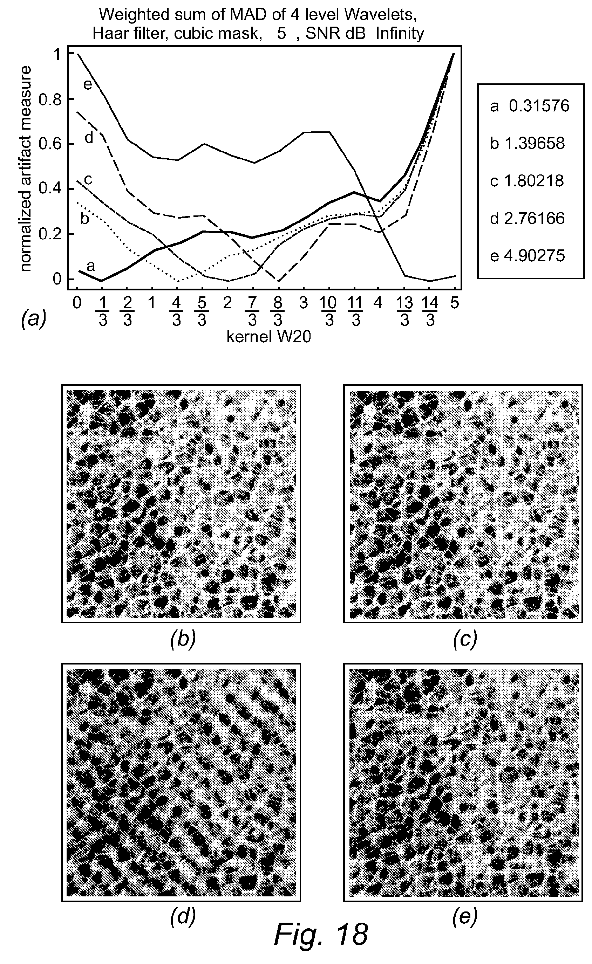

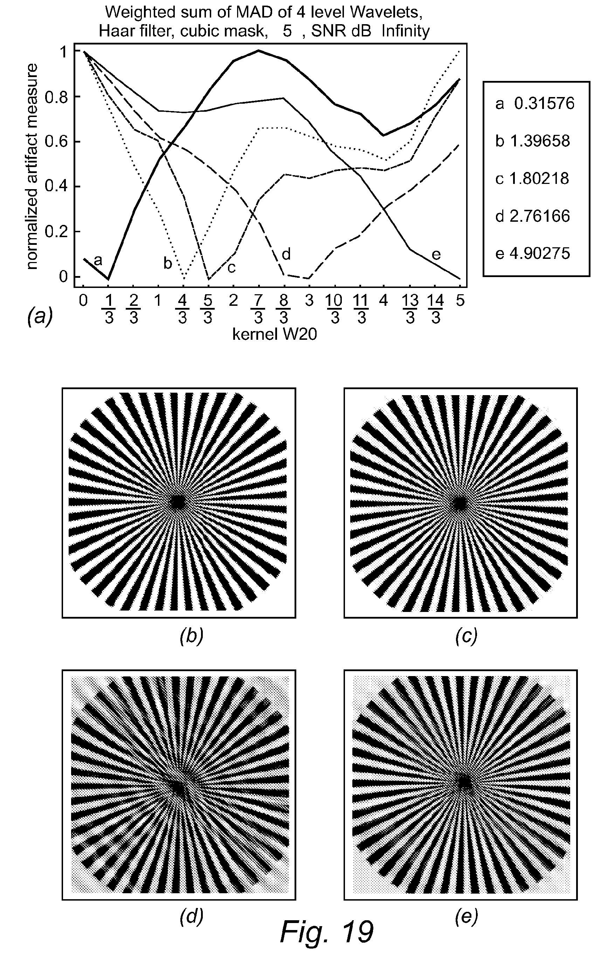

Since the high frequencies are replicated, and indicators of image artefacts, these can be given much higher priority than low frequencies, and therefore the high-pass levels may be weighted differently. In one embodiment, it may be chosen therefore to weigh all level of 1 with exp[0], all levels of 2 with exp[1], and so on. Furthermore, based on empirical studies, a depth of 5 can be shown to give the most stable artefact metric for determining the correct defocus, which gives 4 high pass levels. The results of the metric can be seen in Figure 11-19. A system with a circular aperture has been used with a cubic phase mask with $\alpha=5$.

The restored image is free of defocus artefacts when the coding and decoding kernels are equal or close, and the artefact metric is minimized in these cases.

Figures 11a.to 19a each shows a normalized artefact metric of 5 images as a function of the kernel restoring the image. Each image has a given defocus (5 arbitrary values in terms of waves of defocus parameter (0.31576, 1.39658, 1.80218, 2.76, and 4.90275) and each is restored with 16 kernels from 0-5 waves. The kernel closest to the actual defocus gives the minimum artefact measure. As an example, figures 11-19b-e each show the image defocused by 2.76 waves, and restored with kernels corresponding to a defocus of 2.66, 3, 0 and 5 waves.

In figures 11 to 13, the image is of "Lena" with a signal-to-noise ratio (SNR) before restoration at infinity, 40.256 dB and 30.2584 dB respectively. This shows that the metric works for images with no noise, a little noise and much noise.

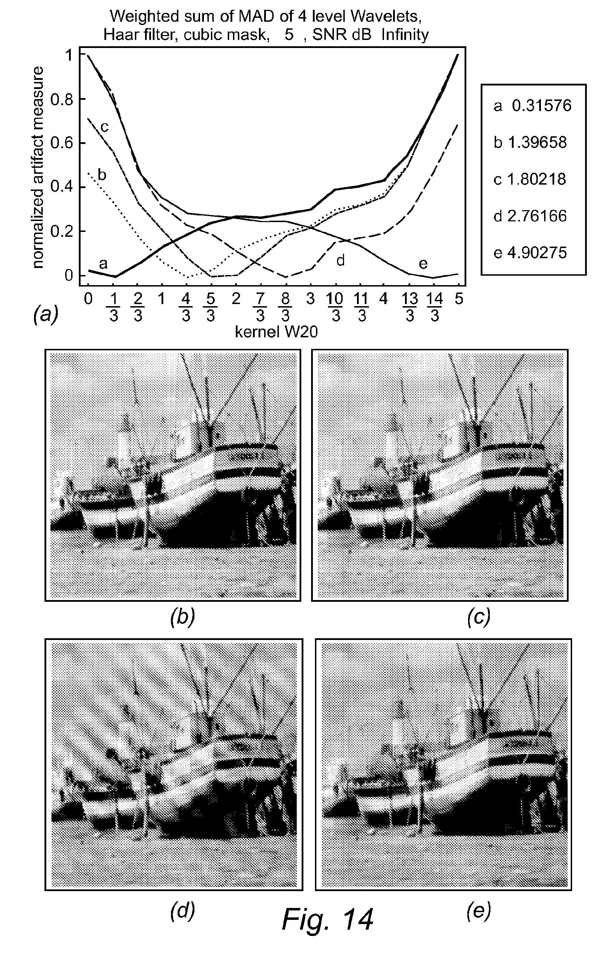

Figures 14 to 19 show further examples of how the metric succeeds (in each case with zero noise examples), with images of a boat, a bridge, a man, a mandrill, plastic bubbles (magnetised under a microscope), and a spoke target.

This technique has a number of applications. As described above, it effectively applies an autofocus step after image capture. Also, it can be considered as a range finder since the distance of an image feature from the optical system can be deduced from the optical set up and the estimated defocus. Furthermore, with image segmentation, the technique also allows for processing post image capture in order to get every object of the image in focus.

Also, when lenses are manufactured, there is always a certain tolerance in the positioning of the lens in the camera module, which can for example be about 10 $\mu$m. This positional uncertainty detracts from the accuracy of focus in traditional imaging systems, but in a wavefront coded imaging system that has the iterative adjustment to the restoration algorithm as outlined above the amount of defocus that is introduced according to positional tolerance errors of the lens can be accounted for. This setting, unique to an individual camera module, can be stored for use by the image processing algorithms, for example it can be stored on a non-volatile memory portion of a coprocessor or even directly on the image processing chip. This then enables sharper image production, or enables the relaxation of tolerance standards to decrease the number of camera modules that are deemed to be defective.

Various improvements and modifications can be made to the above without departing from the scope of the invention. For example, In order to reduce calculation time (with a trade off in the resultant accuracy), the following might be considered: using a smaller depth, using simpler high-pass filters such as a Sobel filter, and/or the weighting of the bands could be chosen such that only the very high level is calculated and evaluated with the MAD.

## Claims

1. A method of removing artefacts from a reconstructed phase encoded image, comprising the steps of:

   a. estimating a degree of defocus in the reconstructed phase encoded image;
   b. performing a reconstruction algorithm on the phase encoded image to obtain a restored image in which the effects of the phase perturbation are removed;
   c. repeating steps a and b for different estimates of degrees of defocus so as to obtain a number of images each corresponding to a different degree of defocus;
   d. applying an artefact metric to each of the obtained restored images;
   e. using the artefact metric to estimate the degree of defocus for the reconstruction algorithm.

2. The method of claim 1 wherein the step of using the artefact metric to estimate the degree of defocus for the reconstruction algorithm comprises:

   performing an iterative analysis of each of the obtained restored images, and
   choosing the defocus parameter that minimises the artefact metric.

3. The method of claim 2 wherein, in the final step, the defocus parameter chosen is the one that minimises said high frequency variations.

4. The method of claim 1, 2 or 3 wherein the steps are automatically carried out by processing means.

5. The method of any preceding claim wherein the artefact metric is based upon the measurement of high frequency variations in the image.

6. The method of claim 5, wherein the artefact metric is the weighted sum of the Median Absolute Deviation (MAD) of high pass bands.

7. The method of claim 6 wherein said high pass bands are obtained using a Discrete Wavelet Transformation (DWT) or by using a Sobel filter.

8. The method of claim 6, wherein each high pass band is obtained with a Haar filter.

9. The method of claims 6 to 8, wherein each high pass band of level L is weighted with exp[L-1].

10. A method of imaging an object, comprising the steps of:

a. introducing a phase perturbation to get a phase encoded image
b. recording the encoded image data;
c. performing a method of removing artefacts from the reconstructed phase encoded image as claimed in any of claims 1 to 9.

11. The method of claim 10, wherein, after the step of recording the phase encoded image data and prior to the subsequent proceeding steps, an image segmentation step is performed and the restored image for each segmented image feature is obtained, each of which are then combined to form the composite restored image.

12. The method of any of claims 10 or 11, wherein the step of introducing a phase perturbation is performed with a phase mask that yields a focus invariant point-spread function.

13. The method of claim 12, wherein the phase mask is a cubic or petal phase mask.

14. The method of any of claims 10 to 13, wherein the step of introducing a phase perturbation comprises a wavefront coding step.

15. The method of any of claims 10 to 14, wherein the step of recording the phase encoded image data comprises detecting the image with a digital image sensor.

16. Signal processing means for carrying out the methods as claimed in any of claims 1 to 9.

17. The signal processing means of claim 16, formed as an integrated circuit or part thereof.

18. The signal processing means of claim 16, being a computer program product executable on a computer for the performance of an image reconstruction algorithm.

19. An imaging system comprising:

an optical system with phase encoding means;
an image sensing means arranged to record the phase encoded image data; and
signal processing means according to claim 16 for performing an image reconstruction algorithm to obtain an image in which the effects of the phase perturbation are removed.

20. An imaging system as claimed in claim 20 further comprising means for carrying out the methods as claimed in any of claims 10 to 15.

21. A mobile telephone, laptop computer, smartphone, webcam, digital still camera, camcorder, optical mouse or barcode reader comprising an imaging system according to claim 19 or 20.

*Fig. 1*

24

26

*Fig. 2*

*Fig. 3a*

*Fig. 3b*

*Fig. 3c*

Defocused edge

spatial coord

*Fig. 4*

Reconstructed edge at a = 5λ

*Fig. 5*

*Fig. 6*

*Fig. 7*

76

90 Object i

92 1st restoration with kernel at $W_{20} = 0\lambda$

N=1

94 Calculation of the metric

N=3

96 Convergence test

Object i restored

Defocus of Object i estimated

N=3

98 Calculate new estimate of the defocus $W_{20}$

100 Restoration with kernel at $W_{20}$

N=N+1

*Fig. 8a*

*Fig. 8b*

74 Object i

79 1st restoration with kernel at $W_{20} = 0\lambda$

80 Calculation of the metric

82 Convergence test

Object i restored

Defocus of Object i estimated

84 Calculate new estimate of the defocus $W_{20}$

86 Restoration with kernel at $W_{20}$

76

Y

N

EP 2 246 819 A1

Variance, cubic mask, 5, SNR dB Infinity

| a | 0.31576 |
| b | 1.39658 |
| c | 1.80218 |
| d | 2.76166 |
| e | 4.90275 |

kernel W20

*(a)*

Variance, cubic mask, 5, SNR dB 30.2542

| a | 0.31576 |
| b | 1.39658 |
| c | 1.80218 |
| d | 2.76166 |
| e | 4.90275 |

kernel W20

*(b)*

*Fig. 9*

(a)  (b)

*Fig. 10*

Fig. 11

Fig. 12

(a) Weighted sum of MAD of 4 level Wavelets, Haar filter, cubic mask, 5, SNR dB 30.2584

a 0.31576
b 1.39658
c 1.80218
d 2.76166
e 4.90275

(b)

(c)

(d)

(e)

Fig. 13

Fig. 14

*(a)*

Weighted sum of MAD of 4 level Wavelets,
Haar filter, cubic mask, 5 , SNR dB Infinity

a  0.31576

b 1.39658

c 1.80218

d 2.76166

e 4.90275

*(b)* *(c)*

*(d)* *(e)*

Fig. 15

Fig. 16

Fig. 17

Fig. 18

(a)

Weighted sum of MAD of 4 level Wavelets,
Haar filter, cubic mask, 5 , SNR dB Infinity

a 0.31576

b 1.39658

c 1.80218

d 2.76166

e 4.90275

(b)

(c)

(d)

(e)

*Fig. 19*

Europäisches
Patentamt
European
Patent Office
Office européen
des brevets

**EUROPEAN SEARCH REPORT**

Application Number

EP 10 16 1532

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 1 926 047 A1 (ST MICROELECTRONICS RES & DEV [GB]) 28 May 2008 (2008-05-28) | 1,2,4, 10-21 | INV. G06T5/00 |
| Y | * the whole document * | 3,5-9 | |
| Y | KAUTSKY J ET AL: "A new wavelet-based measure of image focus" PATTERN RECOGNITION LETTERS, ELSEVIER, AMSTERDAM, NL LNKD- DOI:10.1016/S0167-8655(02)00152-6, vol. 23, no. 14, 1 December 2002 (2002-12-01), pages 1785-1794, XP004372146 ISSN: 0167-8655 * page 1787 - page 1788 * | 3,5-9 | |
| Y | JOHNSTONE I M ET AL: "WAVELET THRESHOLD ESTIMATORS FOR DATA WITH CORRELATED NOISE" JOURNAL OF THE ROYAL STATISTICAL SOCIETY. SERIES B.METHODOLOGICAL, ROYAL STATISTICAL SOCIETY, LONDON, GB LNKD- DOI:10.1111/1467-9868.00071, vol. 59, no. 2, 1 January 1997 (1997-01-01), pages 319-351, XP008033501 ISSN: 0035-9246 * page 324 * | 3,5-9 | TECHNICAL FIELDS SEARCHED (IPC) G06T |

The present search report has been drawn up for all claims

| Place of search | Date of completion of the search | Examiner |
|---|---|---|
| Munich | 15 July 2010 | Rockinger, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

**EP 2 246 819 A1**

## ANNEX TO THE EUROPEAN SEARCH REPORT
## ON EUROPEAN PATENT APPLICATION NO.

EP 10 16 1532

This annex lists the patent family members relating to the patent documents cited in the above-mentioned European search report.
The members are as contained in the European Patent Office EDP file on
The European Patent Office is in no way liable for these particulars which are merely given for the purpose of information.

15-07-2010

| Patent document cited in search report | Publication date | Patent family member(s) | Publication date |
|---|---|---|---|
| EP 1926047 A1 | 28-05-2008 | US 2008131018 A1 | 05-06-2008 |

EPO FORM P0459

For more details about this annex : see Official Journal of the European Patent Office, No. 12/82

33

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1926047 A

**Non-patent literature cited in the description**

- **E. Dowski ; T. W. Cathey.** Extended depth of field through wavefront coding. *Appl. Opt.,* 1995, vol. 34, 1859-1866
- Engineering the Pupil Phase to Improve Image Quality. **S. Prasad ; T. Torgersen ; V. P. Pauca ; R. Plemmons ; J. van der Gracht,.** Proceedings of the SPIE, Vol. 5108 Visual Information Processing XII. 2003, 1-12
- **G. Muyo ; A. Harvey.** Decomposition of the optical transfer function: wavefront coding imaging systems. *Opt. Letters,* 2005, 2715-2717
- **From G. Muyo ; A. Harvey.** Decomposition of the optical transfer function: wavefront coding imaging systems. *Opt. Letters,* 2005, 2715-2717